# EUROPÄISCHE PATENTSCHRIFT

(11) **EP 3 372 567 B1**
(45) Veröffentlichungstag und Bekanntmachung des Hinweises auf die Patenterteilung: **26.06.2019**
(21) Anmeldenummer: 18153336.5
(22) Anmeldetag: 25.01.2018
(51) Int. Cl.: C03C 1/00, C03C 3/087, C03C 3/097, C03C 3/11

(54) **VERFAHREN ZUR HERSTELLUNG ALKALIREICHER ALUMINOSILIKATGLÄSER, ALKALIREICHE ALUMINOSILICATGLÄSER UND IHRE VERWENDUNG**
PROCESS FOR PRODUCING ALKALI METAL-RICH ALUMINOSILICATE GLASSES, ALKALI METAL-RICH ALUMINOSILICATE GLASSES AND USE THEREOF
PROCÉDÉ DE FABRICATION DE VERRES D'ALUMINOSILICATE RICHES EN ALCALI, VERRES D'ALUMINOSILICATE RICHES EN ALCALI ET LEUR UTILISATION

(30) Priorität: 10.03.2017 DE 102017203997
(43) Veröffentlichungstag der Anmeldung: 12.09.2018
(73) Patentinhaber: Schott AG, 55122 Mainz (DE)
(72) Erfinder: KASS, Christof, 95643 Tirschenreuth (DE); EICHHOLZ, Rainer, 60323 Frankfurt am Main (DE)

(56) Entgegenhaltungen:
- CZ-B6- 278 452
- JP-A- 2007 246 365
- US-A- 4 057 408
- US-A- 4 212 919
- US-A1- 2009 075 805
- US-A1- 2015 166 400

## Beschreibung

Die Erfindung betrifft ein Verfahren zur Herstellung von alkalireichen Aluminosilicatgläsern mit einem Gehalt (in mol-% auf Oxidbasis) an Alkalioxiden von 4 - 16 mol-%, an Al₂O₃ von wenigstens 4 mol-% und an B₂O₃ von 0 - 4 mol-% unter Zusatz von wenigstens zwei Läutermitteln zur Gemengezubereitung. Die Erfindung betrifft auch alkalireiche Aluminosilicatglaszusammensetzungen und ihre Verwendung.

Verfahren zur Herstellung von Gläsern weisen die Verfahrensschritte Gemengezubereitung, auch Gemengeeinlegen genannt, Schmelzen des Glases und dessen anschließende Heißformgebung auf. Unter den Begriff des Schmelzens sind hier auch die sich an das Einschmelzen anschließenden Schritte Läutern, Homogenisieren und Konditionieren zur weiteren Verarbeitung zusammengefasst.

Unter Läuterung versteht man in Bezug auf Schmelzen die Entfernung von Gasblasen aus der Schmelze. Um höchste Fremdgas- und Blasenfreiheit zu erzielen, bedarf es der gründlichen Durchmischung und Entgasung des geschmolzenen Gemenges. Das Verhalten von Gasen bzw. Blasen in der Gasschmelze sowie deren Entfernung sind beispielsweise in "Glastechnische Fabrikationsfehler", herausgegeben von H. Jebsen-Marwedel und R. Brückner, 3. Auflage, 1980, Springer-Verlag, Seite 195ff beschrieben.

Es sind allgemein zwei prinzipiell verschiedene Läuterverfahren bekannt, die sich im Wesentlichen durch die Art der Läutergaserzeugung unterscheiden:
Bei der mechanischen Läuterung werden durch Öffnungen im Boden des Schmelzaggregats Gase, z.B. Wasserdampf, Sauerstoff, Stickstoff oder Luft, eingepresst. Das ist das sogenannte "bubbling"-Verfahren.

Am häufigsten sind die chemischen Läuterverfahren. Ihr Prinzip besteht darin, dass der Schmelze bzw. bereits dem Gemenge
- Verbindungen zugesetzt werden, die sich in der Schmelze zersetzen und dabei Gase freisetzen, oder
- Verbindungen, die bei höheren Temperaturen flüchtig sind, oder
- Verbindungen, die in einer Gleichgewichtsreaktion bei höheren Temperaturen Gase abgeben.

Dadurch wird das Volumen vorhandener Blasen vergrößert und deren Auftrieb verstärkt.

Zu den letztgenannten Verbindungen gehören die sogenannten Redox-Läutermittel wie beispielsweise Arsenoxid, Antimonoxid oder auch Ceroxid. Dabei werden als Redox-Läutermittel Oxide von polyvalenten Ionen eingesetzt, die in mindestens zwei Oxidationsstufen auftreten können, welche untereinander in einem temperaturabhängigen Gleichgewicht stehen, wobei bei hohen Temperaturen Sauerstoff freigesetzt wird.

Zu der zweiten Gruppe, den Verbindungen, die bei höheren Temperaturen flüchtig sind und dadurch wirken, gehören z.B. Chloride, z.B. Natriumchlorid. Sie werden unter dem Begriff Verdampfungsläutermittel zusammengefasst.
Zu der erstgenannten Art der chemischen Läuterung, also der Läuterung mittels Verbindungen, die sich zersetzen und dabei Gase freisetzen, gehört die Sulfat-Läuterung.

Die jeweilige Läuterung ist an die Temperaturen gebunden, bei denen aufgrund der thermodynamischen Gegebenheiten die entsprechenden Redox-, Verdampfungs- oder Zersetzungsprozesse ablaufen. So können Kalk-Natron-Gläser oder andere relativ niedrig schmelzende Gläser, z.B. Boratgläser mit Verdampfungsläutermitteln geläutert werden. Redox-Läutermittel zeigen bei höheren Temperaturen häufig eine geringe Resorptionswirkung, d.h. ihre Fähigkeit, Sauerstoff oder andere Gase aus den in der Schmelze vorhandenen kleinen Blasen zu resorbieren, reicht bei vielen hochschmelzenden Gläsern nicht aus. Auch die Sulfat-Läuterung wird i.a. für niedrigschmelzende Gläser eingesetzt, so für Kalk-Natron-Gläser, da das üblicherweise eingesetzte Na₂SO₄ mit dem stets vorhandenen SiO₂ schon bei, verglichen mit dem alleine relativ stabilen Na₂SO₄, tiefen Temperaturen reagiert und Sauerstoff und SO₂ freisetzt.

In der Patentliteratur werden Läuterverfahren für verschiedene Glastypen beschrieben, die für das jeweilige sich aus dem Viskositätsprofil ergebende Schmelzverhalten geeignet sind. Es versteht sich aus dem Geschilderten, dass stets eine genaue Betrachtung der konkreten Glaszusammensetzung vonnöten ist.

In DE 44 30 710 C1 ist die Läuterung von borarmen Borosilicatgläsern mit den Verdampfungsläutermitteln Chlorid und/oder Fluorid beschrieben.

In US 2013/010596 A werden borarme und borfreie alkalihaltige Aluminosilicatgläser beschrieben. Sie werden mit Zinnoxid geläutert. Sie werden als für Pharmabehälter zu verwenden beschrieben, obwohl von Zinnionen bekannt ist, dass sie im Kontakt mit manchen im Glasbehälter abgefüllten Wirkstoffen unerwünschte Reaktionen hervorrufen können.

Es ist nun Aufgabe der Erfindung, ein Verfahren zur Herstellung alkalireicher Aluminosilicatgläser zur Verfügung zu stellen, bei dem die Glasschmelze effektiv geläutert wird, d.h. bei dem Glas mit hoher Qualität bzgl. Blasenfreiheit bzw. - armut resultiert und das eine kostengünstige Läuterung der Glasschmelzen der alkalireichen Aluminosilicatgläser ermöglicht. Es ist auch Aufgabe der Erfindung, solche Gläser bereitzustellen.

Die Aufgabe wird durch das Verfahren gemäß Patentanspruch 1 und die Glaszusammensetzung gemäß Patentanspruch 15 sowie durch den Verwendungsanspruch 18 gelöst.

In dem erfindungsgemäßen Verfahren zur Herstellung von alkalireichen Aluminosilicatgläsern mit den Verfahrensschritten Gemengezubereitung unter Zusatz von wenigstens zwei Läutermitteln, Schmelzen des Glases und anschließende Heißformgebung des geschmolzenen Glases, wobei unter dem Begriff des Schmelzens neben dem Aufschmelzen der Rohstoffe und Scherben auch die sich anschließenden Schritte Läutern und Homogenisieren zusammengefasst sind, werden dem Glasgemenge 0,15 mol-% bis 0,9 mol-% Chlorid(e) und wenigstens ein Läutermittel aus der Gruppe Sulfat(e) (angegeben als SO₃), CeO₂ zugegeben, wobei die Gesamtsumme zugegebener Läutermittel im Gemenge 0,17 mol-% bis 1,3 mol-% beträgt.

Bevorzugt werden dem Gemenge 0,17 mol-% bis 1,1 mol-% an Läutermitteln, besonders bevorzugt bis 0,8 mol-% an Läutermitteln zugegeben.

Bevorzugt ergibt sich die Summe an zugegebenen Läutermitteln aus der zugegebenen Menge an Chlorid(en) und CeO₂ oder an Chlorid(en) und Sulfat(en) oder an Chlorid(en) und CeO₂ und Sulfat(en).

Unter alkalireich wird hier ein Gehalt an Alkalioxiden von 4 mol-% bis 16 mol-% verstanden, wobei sich die Summe der Alkalioxide aus Na₂O und/oder K₂O und/oder Li₂O, vorzugsweise aus Na₂O und/oder K₂O, ergibt. Vorzugsweise beträgt die Summe der Alkalioxide wenigstens 8 mol-%.

Unter Aluminosilicatglas wird hier zur Abgrenzung insb. von Borosilicatgläsern und von Aluminoborosilicatgläsern ein Glas mit einem Borgehalt von 0 mol-% bis 4 mol-% B₂O₃ und einem Gehalt von wenigstens 4 mol-% Al₂O₃ verstanden. Bevorzugt ist ein B₂O₃-Gehalt von 0 bis weniger als 2,7 mol-%. Besonders bevorzugt ist das Glas borfrei. Bevorzugt ist ein Al₂O₃-Gehalt von wenigstens 5 mol-%. Bevorzugt ist ein Al₂O₃-Gehalt von höchstens 14 mol-%.

Die hier beschriebenen Gläser weisen eine ausreichende chemische Beständigkeit auf, so dass sie als Displayglas oder als Primärverpackungsmaterial in der Pharmaindustrie geeignet sind, und sie sind in herkömmlichen Schmelzanlagen bei nicht zu hohen Schmelztemperaturen produzierbar. Vorzugsweise sind sie gut chemisch vorspannbar.

Die Erfinder haben festgestellt, dass überraschenderweise eine Mischläuterung mit neben Chlorid wenigstens einem weiteren Läutermittel aus der Gruppe Sulfat(e), CeO₂ zu deutlich besseren Ergebnissen führt als die im Stand der Technik verwendeten Läuterverfahren und auch als die reine Chloridläuterung. Dies ist insbesondere insofern überraschend, als ja jedes dieser Läutermittel einzeln für niedrigschmelzende Gläser gut geeignet ist und dies sich aufgrund seines jeweiligen spezifischen Effektivitätsmaximums auch in Kombination der Läutermittel nicht ändern sollte.

Wird als weiteres Läutermittel neben Chlorid Sulfat verwendet, so wird dem Gemenge bevorzugt zwischen 0,01 mol-% und 0,08 mol-%, besonders bevorzugt zwischen 0,02 mol-% und 0,05 mol-%Sulfat(e) zugegeben.

Der CeO₂-Gehalt als weiteres Läutermittel im Gemenge beträgt zwischen 0,01 mol-% und 0,1 mol-%, besonders bevorzugt zwischen 0,02 mol-% und 0,04 mol-%.

Werden als Läutermittel neben Chlorid Ceroxid und Sulfat verwendet, können im Gemenge dieselben Einzelgehalte, also 0,15 mol-% bis 0,9 mol-% Chlorid(e), 0,01 mol-% bis 0,08 mol-% Sulfat(e) und 0,01 mol-% bis 0,1 mol-%, Ceroxid , verwendet werden und kann in besonders bevorzugter Ausführungsform der Chloridgehalt im Gemenge auf 0,2 mol-% beschränkt werden.

Das Chlorid kann in Form eines oder mehrerer Chloride, z.B. NaCl oder anderer Alkali- oder Erdalkalichloride zugegeben werden, wobei die Verwendung als NaCl bevorzugt ist.

Wird Sulfat verwendet, kann das Sulfat in Form eines oder mehrerer Sulfate, z.B. CaSO₄. MgSO₄, Na₂SO₄, SrSO₄, BaSO₄ zugegeben werden, wobei die Verwendung von Na₂SO₄ bevorzugt ist. Das verwendete Sulfat muss dabei so ausgewählt werden, dass seine Zersetzungstemperatur an die Viskosität der Glasschmelze bzw. an die Läutertemperatur des Glases angepasst ist.

Vorzugsweise werden die mit dem erfindungsgemäßen Verfahren hergestellten Gläser bei einer Temperatur von wenigstens 1640 °C geschmolzen.

Vorzugsweise werden die mit dem erfindungsgemäßen Verfahren hergestellten Gläser bei einer Temperatur von höchstens 1680 °C geschmolzen.

Es können auch noch weitere Läutermittel wie z.B. Fluorid oder wie AS₂O₃ und Sb₂O₃ zugesetzt werden.

Vorzugsweise wird bis auf unvermeidliche Verunreinigungen kein Fluorid verwendet, da für manche Anwendungen in der Pharmaindustrie fluoridfreies Glas gefordert wird.

Vorzugsweise wird bis auf unvermeidliche Verunreinigungen weder AS₂O₃ noch Sb₂O₃ verwendet, da diese Substanzen umweltgefährdend sind.

Unter unvermeidlichen Verunreinigungen werden in dieser Anmeldung solche Verunreinigungen verstanden, die durch die Natur der Glasherstellung bedingt sind, insbesondere also solche, die durch die verwendeten Rohstoffe oder durch die Schmelzaggregatbetreibung eingeschleppt werden, und die nicht oder nicht mit wirtschaftlich vertretbarem Aufwand vermieden werden können. Je nach der Reinheit der verwendeten Rohstoffe sind solche unvermeidlichen Verunreinigungen auf maximal 1 mol-%, vorzugsweise auf 0,5 mol-%, weiter vorzugsweise auf 0,1 mol-%, oder sogar auf 0,05 mol-% einzeln oder in der Summe beschränkt.

Vorzugsweise wird mit dem erfindungsgemäßen Verfahren ein Aluminosilicatglas geschmolzen, das wenigstens 64 mol-% SiO₂ enthält. Ein Mindestgehalt von 64 mol-% an SiO₂ ist sinnvoll für eine gute chemische Beständigkeit. Vorzugsweise wird mit dem erfindungsgemäßen Verfahren ein Aluminosilicatglas geschmolzen, das höchstens 78 mol-% SiO₂ enthält. Ab einem SiO₂-Gehalt von über 78 mol-% steigt die Verarbeitungstemperatur stark an, was eine Herstellung in Standard-Schmelzaggregaten erschwert. Bevorzugt ist eine SiO₂-Gehalt von höchstens 77 mol-%.

Vorzugsweise wird mit dem erfindungsgemäßen Verfahren ein Aluminosilicatglas geschmolzen, das wenigstens 4 mol-% Al₂O₃ und höchstens 14 mol-% Al₂O₃ enthält. Der minimale Gehalt ist so gewählt, dass die Glasstruktur unterstützt, also eine bessere Vernetzung und eine hervorragende hydrolytische Beständigkeit erreicht wird.

Vorzugsweise wird mit dem erfindungsgemäßen Verfahren ein Aluminosilicatglas geschmolzen, das 0 mol-% B₂O₃ bis 4 mol-% B₂O₃ enthält. Bevorzugt ist ein B₂O₃-Gehalt von 0 bis weniger als 2,7 mol-%. Besonders bevorzugt ist das Glas borfrei.

Vorzugsweise wird mit dem erfindungsgemäßen Verfahren ein Aluminosilicatglas geschmolzen, das wenigstens 4 mol-% Na₂O enthält. Dieser Mindestgehalt an Na₂O hat den Vorteil, eine niedrige Viskosität beim Erschmelzen zu gewährleisten und um andererseits bei der Herstellung von Pharmagläsern und den üblichen Nachverarbeitungsschritten (Waschprozesse, chemisches Vorspannen) ein niedriges Auslaugverhalten zu gewährleisten. Vorzugsweise wird mit dem erfindungsgemäßen Verfahren ein Aluminosilicatglas geschmolzen, das höchstens 14 mol-% Na₂O enthält. Wird dieser Höchstgehalt überschritten, sinkt die hydrolytische Beständigkeit ab. Bevorzugt ist ein Na₂O-Gehalt von höchstens 13,7 mol-%.

Vorzugsweise wird mit dem erfindungsgemäßen Verfahren ein Aluminosilicatglas geschmolzen, das 0 mol-% K₂O bis 3 mol-% K₂O enthält. Ein höherer Kaliumgehalt würde den lonenaustausch im Salzbad beeinträchtigen und damit die Vorspannung verschlechtern. In einigen besonders bevorzugten Ausführungsformen ist das Glas K₂O-frei.

Vorzugsweise wird mit dem erfindungsgemäßen Verfahren ein Aluminosilicatglas geschmolzen, das 0 mol-% Li₂O bis 3 mol-% Li₂O enthält. Ein höherer Lithiumgehalt würde sich nachteilig auf die chemische Beständigkeit des Glases auswirken. Bevorzugt ist, dass das Glas lithiumfrei ist.

Vorzugsweise wird mit dem erfindungsgemäßen Verfahren ein Aluminosilicatglas geschmolzen, das 0 mol-% MgO bis 14 mol-% MgO enthält. Bevorzugt ist das Vorhandensein von MgO mit wenigstens 0,3 mol-%. Der Mindestgehalt von MgO hat den Vorteil, dass die Verarbeitungstemperatur verringert wird. In einigen Ausführungsformen ist das Vorhandensein von MgO mit wenigstens 3 mol-% besonders bevorzugt. Bei einem Gehalt von mehr als 14 mol-% MgO kann es dagegen zu Kristallisation kommen. Bevorzugt ist ein Höchstgehalt von 7 mol-%. In manchen Ausführungsformen ist ein Höchstgehalt von 6,3 mol-% besonders bevorzugt und ein Höchstgehalt von 0,8 mol-% ganz besonders bevorzugt.

Vorzugsweise wird mit dem erfindungsgemäßen Verfahren ein Aluminosilicatglas geschmolzen, das 0 mol-% CaO bis 12 mol-% CaO enthält. Bevorzugt ist das Vorhandensein von CaO mit wenigstens 1 mol-%, besonders bevorzugt mit wenigstens 2 mol-%. Ein Mindestgehalt an CaO hat den Vorteil, dass die Verarbeitungstemperatur abgesenkt wird, ohne die Neutralität zu sehr zu verschlechtern. Bei einem Gehalt von mehr als 12 mol-% CaO kann es zu einer deutlichen Verschlechterung der Neutralität kommen. Sollen die Gläser chemisch vorgespannt werden, so haben hohe CaO-Konzentrationen den Nachteil, dass die Ca-Ionen sich am lonenaustausch beteiligen, sie die Härtung des Glases stören und das Salzbad verunreinigen. Bevorzugt ist ein Höchstgehalt von 8 mol-%, besonders bevorzugt ein Höchstgehalt von 5 mol-%.

Vorzugsweise wird mit dem erfindungsgemäßen Verfahren ein Aluminosilicatglas geschmolzen, das 0 mol-% BaO bis 4 mol-% BaO enthält. Bevorzugt ist, dass das Glas bariumfrei ist. Barium ist für manche Anwendungen in der Pharmaindustrie unerwünscht, da Bariumionen im Kontakt mit manchen im Glasbehälter abgefüllten Wirkstoffen Ausfällungen und damit Eintrübungen erzeugen.

Vorzugsweise wird mit dem erfindungsgemäßen Verfahren ein Aluminosilicatglas geschmolzen, das 0 mol-% SrO bis 6 mol-% SrO enthält. Bevorzugt ist, dass das Glas strontiumfrei ist. Die Verwendung von strontiumhaltigen Gläsern für pharmazeutische Primärpackmittel ist unüblich, da auch Strontiumionen im Kontakt mit manchen im Glasbehälter abgefüllten Wirkstoffen unerwünschte Reaktionen hervorrufen können.

Vorzugsweise wird mit dem erfindungsgemäßen Verfahren ein Aluminosilicatglas geschmolzen, das 0 mol-% ZrO₂ bis 1 mol-% ZrO₂ enthält. Bevorzugt ist, dass das Glas frei von ZrO₂ ist. ZrO₂ erhöht die Schmelztemperatur.

Vorzugsweise wird mit dem erfindungsgemäßen Verfahren ein Aluminosilicatglas geschmolzen, das 0 mol-% SnO₂ bis 0,4 mol-% SnO₂ enthält. Bevorzugt ist, dass das Glas frei von SnO₂ ist. Die Verwendung von SnO₂ sollte in pharmazeutischen Primärpackmitteln vermieden werden, da auch Zinnionen im Kontakt mit manchen im Glasbehälter abgefüllten Wirkstoffen unerwünschte Reaktionen hervorrufen können.

Vorzugsweise wird mit dem erfindungsgemäßen Verfahren ein Aluminosilicatglas geschmolzen, das 0 mol-% TiO₂ bis 2 mol-% TiO₂ enthält. Geringe Zusätze von Titanoxid TiO₂ können die hydrolytische Beständigkeit des Glases verbessern und die Erreichung einer für die Verarbeitung geeigneten Viskosität unterstützen. Je nach Anwendungsfall wird auf den Einsatz von Titanoxid ganz verzichtet.

Vorzugsweise wird also mit dem erfindungsgemäßen Verfahren ein Aluminosilicatglas geschmolzen, das neben Alkalioxiden von 4-16 mol-%, Al₂O₃ von wenigstens 4 mol-% und B₂O₃ von 0 - 4 mol-% (in mol-% auf Oxidbasis) in seiner Grundzusammensetzung (in mol-% auf Oxidbasis) enthält:
SiO₂ 64 - 78
Al₂O₃ 4 - 14
Na₂O 4 - 14
K₂O 0 - 3
Li₂O 0 - 3
MgO 0 - 14
CaO 0 - 12
BaO 0 - 4
SrO 0-6
TiO₂ 0 - 2
ZrO₂ 0 - 1
SnO₂ 0 - 0,4.

Bevorzugt ist ein Verfahren, bei dem bis auf unvermeidliche Verunreinigungen weder BaO, noch SrO, noch Li₂O, noch ZrO₂, noch SnO₂ zugegeben wird, so dass das hergestellte Glas bis auf unvermeidliche Verunreinigungen weder BaO, noch SrO, noch Li₂O, noch ZrO₂, noch SnO₂ enthält.

In einer bevorzugten Ausführungsform des erfindungsgemäßen Verfahrens wird ein Aluminosilicatglas geschmolzen, das neben Alkalioxiden von 8 - 24 mol-%, vorzugsweise Na₂O + K₂O von 8 - 24 mol-%, in seiner Grundzusammensetzung (in mol-% auf Oxidbasis) enthält:
SiO₂ 64-78
Al₂O₃ 5 - 14
Na₂O 4 - 12
K₂O 0,5 - 3
MgO 0-14
CaO 1 - 12
TiO₂ 0 - 2.

In einer anderen bevorzugten Ausführungsform des erfindungsgemäßen Verfahren wird ein Aluminosilicatglas geschmolzen, das in seiner Grundzusammensetzung (in mol-% auf Oxidbasis) enthält:
SiO₂ 67 - 78
B₂O₃ 0 - 4
Al₂O₃ 4 - 9
Na₂O 8,5 - 13,7
K₂O 0 - 1
MgO 3 - 7
CaO 0 - 5.

Bei den meisten Komponenten bleiben die Anteile der Komponenten im Gemenge, in der Glasschmelze und im Produkt gleich. Dies ist bei leichtflüchtigen Verbindungen wie Chlorid oder bei sich zersetzenden Komponenten wie Sulfat nicht der Fall. Der Fachmann weiß diese Verluste zu berücksichtigen.

So führen die o.g. Anteile an Chlorid und Sulfat im Gemenge zu Gehalten von 0,07 mol-% bis 0,8 mol-% Chlorid und 0,002 mol-% bis 0,008 mol-% Sulfat (angegeben als SO₃) im Glas.

Das Läutermittel CeO₂ bleibt, wenn vorhanden, im Gehalt konstant.

Daher gilt das bei der Schilderung des erfindungsgemäßen Verfahrens zu den einzelnen Glaskomponenten Gesagte bis auf die Ausnahmen Chlorid und Sulfat auch für die erfindungsgemäßen Gläser.

Die Erfindung betrifft also auch ein Aluminosilicatglas, das (in mol-% auf Oxidbasis) enthält:
SiO₂ 64 - 78
Al₂O₃ 4 - 14
B₂O₃ 0 - 4
Na₂O 4 - 14
K₂O 0 - 3
Li₂O 0 - 3
mit Na₂O + K₂O + Li₂O 4 -16
MgO 0-14
CaO 0 - 12
BaO 0 - 4
SrO 0 - 6
TiO₂ 0 - 2
ZrO₂ 0 - 1
SnO₂ 0 - 0,4
Cl 0,07 - 0,5
CeO₂ 0,01 - 0,1
SO₃ 0 - 0,01
mit SO₃ + CeO₂ 0,01 - 0,1

Bevorzugt ist, dass das Glas bis auf unvermeidliche Verunreinigungen kein BaO und/oder kein SrO und/oder kein Li₂O und/oder kein ZrO₂ und/oder kein SnO₂ enthält.

Besonders bevorzugt ist, dass das Glas bis auf unvermeidliche Verunreinigungen weder BaO, noch SrO, noch Li₂O, noch ZrO₂, noch SnO₂ enthält.

In einer bevorzugten Ausführungsform enthält das erfindungsgemäße Aluminosilicatglas (in mol-% auf Oxidbasis):
SiO₂ 64-78
Al₂O₃ 5 - 14
Na₂O 4 - 12
K₂O 0,5 - 3
mit Na₂O + K₂O4 -16
MgO 0 - 14
CaO 1 - 12
TiO₂ 0 - 2
Cl 0,07 - 0,5
CeO₂ 0,01 - 0,1
SO₃ 0 - 0,01
mit SO₃+ CeO₂ 0,01 - 0,1

In einer anderen bevorzugten Ausführungsform enthält das erfindungsgemäße Aluminosilicatglas (in mol-% auf Oxidbasis):
SiO₂ 67 - 78
B₂O₃ 0 - 4
Al₂O₃ 4 - 9
Na₂O 8,5 - 13,7
K₂O 0 - 1
MgO 3 - 7
CaO 0 - 5
Cl 0,07 - 0,5
CeO₂ 0,01 - 0,1
SO₃ 0 - 0,008
mit SO₃ + CeO₂ 0,01 - 0,1

In weiteren bevorzugten Ausführungsformen bestehen die Gläser der geschilderten Zusammensetzungsbereiche im Wesentlichen aus den in den jeweils genannten Zusammensetzungsbereichen genannten Komponenten. Dabei bedeutet "im Wesentlichen bestehend aus", dass die aufgeführten Komponenten wenigstens 96 % der Gesamtzusammensetzung betragen.

In weiteren bevorzugten Ausführungsformen bestehen die Gläser der geschilderten Zusammensetzungsbereiche aus den in den jeweils genannten Zusammensetzungsbereichen genannten Komponenten.

Das Verfahren dient insbesondere der Herstellung von Gläsern mit einer Schmelztemperatur von wenigstens 1640 °C geschmolzen.

Das Verfahren dient insbesondere der Herstellung von Gläsern mit einer guten chemischen Beständigkeit, insbesondere mit einer hydrolytischen Beständigkeit nach DIN ISO 720 HGA1.

Das Verfahren dient insbesondere der Herstellung von chemisch vorspannbaren Gläsern. Bei dem chemischen Vorspannen wird durch lonenaustausch, beispielsweise im Salzbad, z.B. ein gewisser Anteil der Natrium-Ionen durch Kalium-Ionen ersetzt, was wegen der größeren Kalium-Ionen zu einer Druckspannung im Glas führt.

Unter den genannten Verfahrensschritt der Heißformgebung fallen die verschiedensten üblichen Methoden der Heißformgebung wie Ziehen, zu Rohren oder zu Bändern, oder Floaten oder Walzen, Gießen, Blasen, Pressen, wie sie je nach Verwendungszweck der hergestellten Gläser, Flach- oder Hohlgläser, angebracht sind. Der Fachmann weiß für den jeweiligen Verwendungszweck die geeignete Glaszusammensetzung auszuwählen und entsprechend die Parameter des Verfahrensschritt Heißformgebung zu wählen.

Die nach dem erfindungsgemäßen Verfahren hergestellten Gläser und die erfindungsgemäßen Gläser sind besonders geeignet für die Verwendung
- als Pharmaprimärpackmittel, insbesondere als Flasche, Spritze, Karpule oder Ampulle,
- als chemisch vorspannbares Glas,
- als Substrat, Superstrat oder Abdeckung, insbesondere für elektrotechnische Anwendungen, für PDP-, OLED-Bildschirme, sowie für die Photovoltaik,
- als Rohrglas für sonstige Anwendungen, insbesondere für Lampen, Halogenlampen oder Leuchtstoffröhren oder für solarthermische Anwendungen.

Die Erfindung soll anhand von Ausführungs- und Vergleichsbeispielen weiter erläutert werden.

Als Grundzusammensetzungen für die Ausführungs- und die Vergleichsbeispiele dienten die folgenden Grundzusammensetzungen G1 und G2, beide in mol-% auf Oxidbasis:
G1:
SiO₂: 68,9; Al₂O₃: 11,55; Na₂O: 9,55; K₂O: 1,1; MgO: 0,5; CaO: 7,3; TiO₂: 1,05. G2:
SiO₂: 75,7; Al₂O₃: 5,9; Na₂O: 11,4; K₂O: 0,1; MgO: 6,6; CaO: 0,3.

Alle Beispiele wurden in einem elektrischen Versuchsofen mit Gemenge für jeweils 1 kg Glas zwischen 1640 °C und 1680 °C geschmolzen und geläutert. Die Schmelzzeit betrug ca. fünf Stunden ohne Einlegezeit. Nach Einstellen der Tiegel mit etwa einem Drittel des Gemenges erfolgte zweimaliges Nachlegen. Die Zeit vom ersten Einstellen der Tiegel bis zur letzten Einlage, also die Einlegezeit, lag bei zwei Stunden. Nach dem Schmelzen wurden die Gläser in Blöcke mit einer Dicke von 2cm gegossen. Bei allen Beispielen wurden als Rohstoffe verwendet: Quarzsand, Aluminiumoxid, Natriumcarbonat, Kaliumnitrat, Dolomit, Calciumcarbonat, Anatas. Als Chlorid wurde NaCl verwendet. Als Sulfat wurde Na₂SO₄ verwendet. Als Ceroxid wurde CeO₂ verwendet.

Es wurden unter Verwendung der genannten Bestandteile in den genannten Anteilen (in mol-%) folgende Beispiele hergestellt (Sulfat stets angegeben als SO₃) (Eine vermeintliche Summe > 100 % wurde jeweils durch Reduktion des SiO₂-Gehaltes in G auf 100 % korrigiert).

| | |
|---|---|
| A1 | G1 bzw. G2, jeweils + 0,28 mol-% Chlorid + 0,025 mol-% Sulfat (Referenzbeispiel) |
| A2 | G1 bzw. G2, jeweils + 0,37 mol-% Chlorid + 0,02 mol% CeO₂ |
| A3 | G1 bzw. G2, jeweils + 0,19 mol-% Chlorid + 0,025 mol-% Sulfat + 0,02 mol-% CeO₂ |
| A4 | G1 bzw. G2, jeweils + 0,5 mol-% Chlorid + 0,02 mol-% Sulfat + 0,02 mol-% CeO₂ |
| A5 | G1 bzw. G2, jeweils + 0,3 mol-% Chlorid + 0,02 mol-% Sulfat + 0,06 mol-% CeO₂ |
| V1 | G1 + 0,55 mol-% Chlorid |
| V2 | G1 + 0,07 mol-% Sulfat |
| V3 | G1 + 0,1 mol-% SnO₂ |

An den gegossenen Blöcken wurden die mit dem bloßen Auge sichtbaren Blasen gezählt.

Das Ergebnis

| | |
|---|---|
| A1 | 0 Blasen/cm³ |
| A2 | 0 Blasen/cm³ |
| A3 | 0 Blasen/cm³ |
| A4 | 0 Blasen/cm³ |
| A5 | 0 Blasen/cm³ |
| V1 | 1 Blase/ cm³ |
| V2 | 5 Blasen/ cm³ |
| V3 | 3 Blasen/ cm³ |

zeigt die besondere Läuterwirkung der erfindungsgemäßen Mischläuterung. Sowohl die Chlorid-Cer-(A2) als auch die Chlorid-Sulfat-Läuterung (A1) zeigen nicht nur im Vergleich zur reinen Chlorid-Läuterung (V1) und zur Zinnoxid-Läuterung (V3), sondern mit ihrer Blasenfreiheit auch absolut sehr gute Ergebnisse. Diese Blasenfreiheit wird auch durch die Cer-Chlorid-Sulfat-Läuterung (A3 - A5) erzielt. Diese letztgenannte Mischläuterung hat den zusätzlichen Vorteil, dass sie für dasselbe gute Ergebnis weniger Chlorid benötigt. Dies ist aus verfahrenstechnischen Gründen, auch aus Gründen des Umweltschutzes vorteilhaft. Und auch das erhaltene Glas enthält weniger Chlorid, wodurch bei der Herstellung als Glasrohr und seiner Weiterverarbeitung weniger Ausdampfprodukte entstehen. Solche Ausdampfprodukte würden sich an der inneren Glaswandung der Glasröhren und der aus ihnen hergestellten Behälter absetzen und unerwünschte sogenannte Lampenringe bilden.

## Patentansprüche

1. Verfahren zur Herstellung von alkalireichen Aluminosilicatgläsern mit einem Gehalt (in mol-% auf Oxidbasis) an Alkalioxiden von 4-16 mol-%, an Al₂O₃ von wenigstens 4 mol-% und an B₂O₃ von 0 - 4 mol-% mit den Verfahrensschritten Gemengezubereitung unter Zusatz von wenigstens zwei Läutermitteln, Schmelzen des Glases und anschließende Heißformgebung des geschmolzenen Glases,
**dadurch gekennzeichnet,**
**dass** dem Glasgemenge 0,15 mol-% bis 0,9 mol-% Chlorid(e) und 0,01 mol-% bis 0,1 mol-% an CeO₂ zugegeben wird, wobei die Gesamtsumme zugegebener Läutermittel im Gemenge 0,17 mol-% bis 1,3 mol-% beträgt.

2. Verfahren nach Anspruch 1,
**dadurch gekennzeichnet,**
**dass** dem Gemenge ein Läutermittel aus der Gruppe Sulfat(e) (angegeben als SO₃) zugegeben wird.

3. Verfahren nach Anspruch 1 oder 2,
**dadurch gekennzeichnet,**
**dass** dem Gemenge 0,17 mol-% bis 0,8 mol-% an Läutermitteln zugegeben wird.

4. Verfahren nach Anspruch 2 oder 3,
**dadurch gekennzeichnet,**
**dass** dem Gemenge 0,01 mol-% bis 0,08 mol-% an Sulfat(en) zugegeben wird.

5. Verfahren nach einem der Ansprüche 1 bis 4,
**dadurch gekennzeichnet,**
**dass** dem Gemenge weder AS₂O₃ noch Sb₂O₃ zugegeben wird.

6. Verfahren nach einem der Ansprüche 1 bis 5,
**dadurch gekennzeichnet,**
**dass** das Glas bei einer Temperatur von wenigstens 1640 °C geschmolzen wird.

7. Verfahren nach einem der Ansprüche 1 bis 6,
**dadurch gekennzeichnet,**
**dass** ein Aluminosilicatglas geschmolzen wird, das neben Alkalioxiden von 4-16 mol-%,
Al₂O₃ von wenigstens 4 mol-% und
B₂O₃ von 0 - 4 mol-% (in mol-% auf Oxidbasis) enthält:
SiO₂ 64 - 78
Al₂O₃ 4 - 14
Na₂O 4 - 14
K₂O 0 - 3
Li₂O 0-3
MgO 0-14
CaO 0 - 12
BaO 0 - 4
SrO 0-6
TiO₂ 0 - 2
ZrO₂ 0 - 1
SnO₂ 0 - 0,4.

8. Verfahren nach einem der Ansprüche 1 bis 7,
**dadurch gekennzeichnet,**
**dass** dem Gemenge bis auf unvermeidliche Verunreinigungen weder BaO, noch SrO, noch Li₂O, noch ZrO₂, noch SnO₂ zugegeben werden.

9. Verfahren nach einem der Ansprüche 1 bis 8,
**dadurch gekennzeichnet,**
**dass** ein Aluminosilicatglas geschmolzen wird, das neben Alkalioxiden von 4 - 16 mol-%, vorzugsweise Na₂O + K₂O von 4 - 15 mol-%, (in mol-% auf Oxidbasis) enthält:
SiO₂ 64-78
Al₂O₃ 5 - 14
Na₂O 4 - 12
K₂O 0,5 - 3
MgO 0-14
CaO 1 - 12
TiO₂ 0 - 2.

10. Verfahren nach einem der Ansprüche 1 bis 8,
**dadurch gekennzeichnet,**
**dass** ein Aluminosilicatglas geschmolzen wird, das (in mol-% auf Oxidbasis) enthält:
SiO₂ 67 - 78
B₂O₃ 0 - 4
Al₂O₃ 4 - 9
Na₂O 8,5 - 13,7
K₂O 0 - 1
MgO 3 - 7
CaO 0 - 5.

11. Verfahren nach einem der Ansprüche 1 bis 10,
**dadurch gekennzeichnet,**
**dass** Chlorid als eine oder mehrere Komponenten aus der Gruppe der Alkali- und der Erdalkalichloride zugegeben wird.

12. Verfahren nach Anspruch 11,
**dadurch gekennzeichnet,**
**dass** Chlorid als NaCl zugegeben wird.

13. Verfahren nach einem der Ansprüche 2 bis 12, **dadurch gekennzeichnet,**
**dass** Sulfat als eine oder mehrere Komponenten aus der Gruppe CaSO₄. MgSO₄, Na₂SO₄, SrSO₄, BaSO₄ zugegeben wird.

14. Verfahren nach Anspruch 13,
**dadurch gekennzeichnet,**
**dass** Sulfat als Na₂SO₄ zugegeben wird.

15. Alkalireiches Aluminosilicatglas, das (in mol-% auf Oxidbasis) enthält:
SiO₂ 64-78
Al₂O₃ 4 - 14
B₂O₃ 0 - 4
Na₂O 4 - 14
K₂O 0 -3
Li₂O 0-3
mit Na₂O + K₂O + Li₂O 4 -16
MgO 0 - 14
CaO 0 - 12
BaO 0 - 4
SrO 0-6
TiO₂ 0 - 2
ZrO₂ 0 - 1
SnO₂ 0 - 0,4
Cl 0,07 - 0,5
CeO₂ 0.01 - 0,1
SO₃ 0 - 0,01
mit SO₃ + CeO₂ 0.01 - 0,1

16. Aluminosilicatglas nach Anspruch 15, das (in mol-% auf Oxidbasis) enthält:
SiO₂ 64 - 78
Al₂O₃ 5 - 14
Na₂O 4 - 12
K₂O 0,5 - 3
mit Na₂O + K₂O 4 - 15
MgO 0 - 14
CaO 1 - 12
TiO₂ 0 - 2
Cl 0,07 - 0,5
CeO₂ 0,01 - 0,1
SO₃ 0 - 0,01
mit SO₃ + CeO₂ 0,01 - 0,1

17. Aluminosilicatglas nach Anspruch 15, das (in mol-% auf Oxidbasis) enthält:
SiO₂ 67 - 78
B₂O₃ 0 - 4
Al₂O₃ 4 - 9
Na₂O 8,5 - 13,7
K₂O 0 - 1
MgO 3-7
CaO 0 - 5
Cl 0,07 - 0,5
CeO₂ 0,01 - 0,1
SO₃ 0 - 0,01
mit SO₃ + CeO₂ 0,01 - 0,1

18. Verwendung eines Glases nach einem der Ansprüche 15 bis 17 oder eines nach einem der Ansprüche 1 bis 14 hergestellten Glases als Pharmaprimärpackmittel, insbesondere als Flasche, Spritze, Karpule oder Ampulle, als chemisch vorspannbares Glas, als Substrat, Superstrat oder Abdeckung, insbesondere für elektrotechnische Anwendungen, für PDP-, OLED-Bildschirme, sowie für die Photovoltaik, als Rohrglas für sonstige Anwendungen, insbesondere für Lampen, Halogenlampen oder Leuchtstoffröhren oder für solarthermische Anwendungen.

## Claims

1. Process for producing alkali metal-rich aluminosilicate glasses having a content (in mol% based on oxide) of alkali metal oxides of 4-16 mol%, of Al₂O₃ of at least 4 mol% and of B₂O₃ of 0-4 mol%, comprising the process steps of formulating the batch with addition of at least two refining agents, melting the glass and then hot-forming the molten glass,
**characterized in that**
0.15 mol% to 0.9 mol% of chloride(s) and 0.01 mol% to 0.1 mol% of CeO₂ are added to the glass batch, where the sum total of refining agents added in the batch is 0.17 mol% to 1.3 mol%.

2. Process according to Claim 1,
**characterized in that**
a refining agent from the group of sulfate(s) (reported as SO₃) is added to the batch.

3. Process according to Claim 1 or 2,
**characterized in that**
0.17 mol% to 0.8 mol% of refining agents is added to the batch.

4. Process according to Claim 2 or 3,
**characterized in that**
0.01 mol% to 0.08 mol% of sulfate(s) is added to the batch.

5. Process according to any of Claims 1 to 4,
**characterized in that**
neither AS₂O₃ nor Sb₂O₃ is added to the batch.

6. Process according to any of Claims 1 to 5,
**characterized in that**
the glass is melted at a temperature of at least 1640°C.

7. Process according to any of Claims 1 to 6,
**characterized in that**
an aluminosilicate glass is melted, comprising, in addition to alkali metal oxides at 4-16 mol%, Al₂O₃ at at least 4 mol% and
B₂O₃ at 0-4 mol% (in mol% based on oxide):
SiO₂ 64-78
Al₂O₃ 4-14
Na₂O 4-14
K₂O 0-3
Li₂O 0-3
MgO 0-14
CaO 0-12
BaO 0-4
SrO 0-6
TiO₂ 0-2
ZrO₂ 0-1
SnO₂ 0-0.4.

8. Process according to any of Claims 1 to 7,
**characterized in that**
apart from unavoidable impurities neither BaO, nor SrO, nor Li₂O, nor ZrO₂, nor SnO₂ is added to the batch.

9. Process according to any of Claims 1 to 8,
**characterized in that**
an aluminosilicate glass is melted, comprising, as well as alkali metal oxides at 4-16 mol%, preferably Na₂O + K₂O at 4-15 mol%,
(in mol% based on oxide):
SiO₂ 64-78
Al₂O₃ 5-14
Na₂O 4-12
K₂O 0.5-3
MgO 0-14
CaO 1-12
TiO₂ 0-2.

10. Process according to any of Claims 1 to 8,
**characterized in that**
an aluminosilicate glass is melted, comprising (in mol% based on oxide):
SiO₂ 67-78
B₂O₃ 0-4
Al₂O₃ 4-9
Na₂O 8.5-13.7
K₂O 0-1
MgO 3-7
CaO 0-5.

11. Process according to any of Claims 1 to 10,
**characterized in that**
chloride is added in the form of one or more components from the group of the alkali metal and alkaline earth metal chlorides.

12. Process according to Claim 11,
**characterized in that**
chloride is added in the form of NaCl.

13. Process according to any of Claims 2 to 12,
**characterized in that**
sulfate is added in the form of one or more components from the group of CaSO₄, MgSO₄, Na₂SO₄, SrSO₄, BaSO₄.

14. Process according to Claim 13,
**characterized in that**
sulfate is added in the form of Na₂SO₄.

15. Alkali metal-rich aluminosilicate glass comprising (in mol% based on oxide):
SiO₂ 64-78
Al₂O₃ 4-14
B₂O₃ 0-4
Na₂O 4-14
K₂O 0-3
Li₂O 0-3
with Na₂O + K₂O + Li₂O 4-16
MgO 0-14
CaO 0-12
BaO 0-4
SrO 0-6
TiO₂ 0-2
ZrO₂ 0-1
SnO₂ 0-0.4
Cl 0.07-0.5
CeO₂ 0.01-0.1
SO₃ 0-0.01
with SO₃ + CeO₂ 0.01-0.1.

16. Aluminosilicate glass according to Claim 15, comprising (in mol% based on oxide):
SiO₂ 64-78
Al₂O₃ 5-14
Na₂O 4-12
K₂O 0.5-3
with Na₂O + K₂O 4-15
MgO 0-14
CaO 1-12
TiO₂ 0-2
Cl 0.07-0.5
CeO₂ 0.01-0.1
SO₃ 0-0.01
with SO₃ + CeO₂ 0.01-0.1.

17. Aluminosilicate glass according to Claim 15, comprising (in mol% based on oxide):
SiO₂ 67-78
B₂O₃ 0-4
Al₂O₃ 4-9
Na₂O 8.5-13.7
K₂O 0-1
MgO 3-7
CaO 0-5
Cl 0.07-0.5
CeO₂ 0.01-0.1
SO₃ 0-0.01
with SO₃ + CeO₂ 0.01-0.1.

18. Use of a glass according to any of Claims 15 to 17 or of a glass produced according to any of Claims 1 to 14 as primary pharmaceutical packaging means, especially as a bottle, syringe, carpule or ampoule, as a chemically temperable glass, as a substrate, superstrate or cover, especially for electrical engineering applications, for PDP and OLED screens, and for photovoltaics, as tubing glass for other applications, especially for lamps, halogen lamps or fluorescent tubes, or for solar-thermal applications.

## Revendications

1. Procédé de fabrication de verres d'aluminosilicate riches en alcalis ayant une teneur (en % en moles en termes d'oxydes) en oxydes alcalins de 4 à 16 % en moles, en Al₂O₃ d'au moins 4 % en moles et en B₂O₃ de 0 à 4 % en moles, comprenant les étapes de procédé suivantes : la préparation d'un mélange en utilisant au moins deux agents d'affinage, la fusion du verre, puis le façonnage à chaud du verre fondu,
**caractérisé en ce que**
0,15 % en moles à 0,9 % en moles d'un ou de plusieurs chlorures et 0,01 % en moles à 0,1 % en moles de CeO₂ sont ajoutés au mélange de verre, la somme totale des agents d'affinage ajoutés au mélange étant de 0,17 % en moles à 1,3 % en moles.

2. Procédé selon la revendication 1, **caractérisé en ce qu'**un agent d'affinage du groupe constitué par un ou plusieurs sulfates (indiqués en tant que SO₃) est ajouté au mélange.

3. Procédé selon la revendication 1 ou 2, **caractérisé en ce que** 0,17 % en moles à 0,8 % en moles d'agents d'affinage sont ajoutés au mélange.

4. Procédé selon la revendication 2 ou 3, **caractérisé en ce que** 0,01 % en moles à 0,08 % en moles d'un ou de plusieurs sulfates sont ajoutés au mélange.

5. Procédé selon l'une quelconque des revendications 1 à 4, **caractérisé en ce que** ni As₂O₃, ni Sb₂O₃ n'est ajouté au mélange.

6. Procédé selon l'une quelconque des revendications 1 à 5, **caractérisé en ce que** le verre est fondu à une température d'au moins 1 640 °C.

7. Procédé selon l'une quelconque des revendications 1 à 6, **caractérisé en ce qu'**un verre d'aluminosilicate est fondu, qui contient, en plus des oxydes alcalins à hauteur de 4 à 16 % en moles, d'Al₂O₃ à hauteur d'au moins 4 % en moles et de B₂O₃ à hauteur de 0 à 4 % en moles, (en % en moles en termes d'oxydes) :
SiO₂ 64 à 78,
Al₂O₃ 4 à 14,
Na₂O 4 à 14,
K₂O 0 à 3,
Li₂O 0 à 3,
MgO 0 à 14,
CaO 0 à 12,
BaO 0 à 4,
SrO 0 à 6,
TiO₂ 0 à 2,
ZrO₂ 0 à 1,
SnO₂ 0 à 0,4.

8. Procédé selon l'une quelconque des revendications 1 à 7, **caractérisé en ce que** ni BaO, ni SrO, ni Li₂O, ni ZrO₂, ni SnO₂ n'est ajouté au mélange, à l'exception des impuretés inévitables.

9. Procédé selon l'une quelconque des revendications 1 à 8, **caractérisé en ce qu'**un verre d'aluminosilicate est fondu, qui contient, en plus des oxydes alcalins à hauteur de 4 à 16 % en moles, de préférence Na₂O + K₂O à hauteur de 4 à 15 % en moles, (en % en moles en termes d'oxydes) :
SiO₂ 64 à 78,
Al₂O₃ 5 à 14,
Na₂O 4 à 12,
K₂O 0,5 à 3,
MgO 0 à 14,
CaO 1 à 12,
TiO₂ 0 à 2.

10. Procédé selon l'une quelconque des revendications 1 à 8, **caractérisé en ce qu'**un verre d'aluminosilicate est fondu, qui contient (en % en moles en termes d'oxydes) :
SiO₂ 67 à 78,
B₂O₃ 0 à 4,
Al₂O₃ 4 à 9,
Na₂O 8,5 à 13,7,
K₂O 0 à 1,
MgO 3 à 7,
CaO 0 à 5.

11. Procédé selon l'une quelconque des revendications 1 à 10, **caractérisé en ce que** du chlorure est ajouté sous la forme d'un ou de plusieurs composants du groupe constitué par les chlorures alcalins et alcalino-terreux.

12. Procédé selon la revendication 11, **caractérisé en ce que** du chlorure est ajouté sous la forme de NaCl.

13. Procédé selon l'une quelconque des revendications 2 à 12, **caractérisé en ce que** du sulfate est ajouté sous la forme d'un ou de plusieurs composants du groupe constitué par CaSO₄, MgSO₄, Na₂SO₄, SrSO₄, BaSO₄.

14. Procédé selon la revendication 13, **caractérisé en ce que** du sulfate est ajouté sous la forme de Na₂SO₄.

15. Verre d'aluminosilicate riche en alcalis, qui contient (en % en moles en termes d'oxydes) :
SiO₂ 64 à 78,
Al₂O₃ 4 à 14,
B₂O₃ 0 à 4,
Na₂O 4 à 14,
K₂O 0 à 3,
Li₂O 0 à 3,
avec Na₂O + K₂O + Li₂O 4 à 16,
MgO 0 à 14,
CaO 0 à 12,
BaO 0 à 4,
SrO 0 à 6,
TiO₂ 0 à 2,
ZrO₂ 0 à 1,
SnO₂ 0 à 0,4,
Cl 0, 07 à 0,5,
CeO₂ 0, 01 à 0,1,
SO₃ 0 à 0, 01,
avec SO₃ + CeO₂ 0, 01 à 0,1.

16. Verre d'aluminosilicate selon la revendication 15, qui contient (en % en moles en termes d'oxydes) :
SiO₂ 64 à 78,
Al₂O₃ 5 à 14,
Na₂O 4 à 12,
K₂O 0,5 à 3,
avec Na₂O + K₂O 4 à 15,
MgO 0 à 14,
CaO 1 à 12,
TiO₂ 0 à 2,
Cl 0, 07 à 0,5,
CeO₂ 0,01 à 0,1,
SO₃ 0 à 0, 01,
avec SO₃ + CeO₂ 0, 01 à 0,1.

17. Verre d'aluminosilicate selon la revendication 15, qui contient (en % en moles en termes d'oxydes) :
SiO₂ 67 à 78,
B₂O₃ 0 à 4,
Al₂O₃ 4 à 9,
Na₂O 8,5 à 13,7,
K₂O 0 à 1,
MgO 3 à 7,
CaO 0 à 5,
Cl 0, 07 à 0,5,
CeO₂ 0, 01 à 0,1,
SO₃ 0 à 0, 01,
avec SO₃ + CeO₂ 0, 01 à 0,1.

18. Utilisation d'un verre selon l'une quelconque des revendications 15 à 17 ou d'un verre fabriqué selon l'une quelconque des revendications 1 à 14 en tant qu'emballage pharmaceutique primaire, notamment en tant que bouteille, seringue, cartouche ou ampoule, en tant que verre pouvant être trempé chimiquement, en tant que substrat, superstrat ou recouvrement, notamment pour des applications électrotechniques, pour des écrans PDP, OLED, ainsi que pour la photovoltaïque, en tant que verre pour tubes pour d'autres applications, notamment pour des lampes, des lampes halogène ou des tubes fluorescents ou pour des applications thermiques solaires.
